# EUROPÄISCHE PATENTSCHRIFT

(11) **EP 4 070 065 B1**
(45) Veröffentlichungstag und Bekanntmachung des Hinweises auf die Patenterteilung: **04.06.2025**
(21) Anmeldenummer: 20845674.9
(22) Anmeldetag: 01.12.2020
(51) Int. Cl.: G01M 5/00, G01M 13/00, G01M 15/14, G01H 1/00, G01H 9/00, F01D 5/34

(54) **VERFAHREN ZUM ERMITTELN MINDESTENS EINES MECHANISCHEN PARAMETERS EINES MECHANISCHEN OBJEKTS**
METHOD FOR DETERMINING AT LEAST ONE MECHANICAL PARAMETER OF A MECHANICAL OBJECT
PROCÉDÉ POUR DÉTERMINER AU MOINS UN PARAMÈTRE MÉCANIQUE D'UN OBJET MÉCANIQUE

(30) Priorität: 03.12.2019 DE 102019218809
(43) Veröffentlichungstag der Anmeldung: 12.10.2022
(73) Patentinhaber: MTU Aero Engines AG, 80995 München (DE)
(72) Erfinder: SCHÖNENBORN, Harald, 80995 München (DE); KOHLMANN, Lukas, 80995 München (DE); SCHWARZ, Stefan, 80995 München (DE); KRACK, Malte, 70569 Stuttgart (DE); SEEGER, Benjamin, 70569 Stuttgart (DE)
(86) Internationale Anmeldenummer: PCT/DE2020/000297
(87) Internationale Veröffentlichungsnummer: WO 2021/110190

(56) Entgegenhaltungen:
- EP-A1- 3 521 781
- EP-A2- 2 721 402
- EP-B1- 2 721 402
- WO-A2-2010/097074
- US-A1- 2004 243 310

## Beschreibung

### Technisches Feld

Im Folgenden werden Ausführungsformen offenbart, die sich auf ein Verfahren zum Ermitteln mindestens eines mechanischen Parameters eines mechanischen Objektes beziehen, zum Beispiel auf eine Steifigkeit oder ein Schwingungsverhalten eines integral gefertigten Schaufelrades.

### Hintergrund

Das Vermessen von mechanischen Objekten, z.B. von Verdichterrädern und/oder Turbinenrädern für Turbomaschinen, kann traditionell durch Aufbringen einer Anregung des Objektes erfolgen, welche eine mechanische Antwort des Objektes auslöst, die als zeitabhängiges Signal messtechnisch erfasst werden kann. Zur Bestimmung der mechanischen Eigenschaften des Objektes, z.B. dessen Masse, Dämpfung und/oder dessen Eigenfrequenzen und Schwingungsmoden, kann das Zeitsignal in den Frequenzbereich umgewandelt und damit eine entsprechende Übertragungsfunktion ausgelegt werden, die dann wiederum als Modell Auskunft über die mechanischen Objekteigenschaften ermöglicht und simuliert werden kann. Eine Messvorrichtung für ein solches Verfahren ist in der DE 102009010375 A1 offenbart.

Schaufelräder, z.B. Verdichterräder und/oder Turbinenräder für Turbomaschinen, wurden früher aus einer Radscheibe und speziell gefertigten Schaufelblättern hergestellt. Die Schaufelräder wurden dabei formschlüssig mit einer Radnabe verbunden, insbesondere durch eine Schwalbenschwanzverbindung. Neuerdings werden Schaufelräder auch integral hergestellt. Integrale Schaufelräder (auch "blade integrated disks" oder "Blisks" genannt) weisen eine einteilige Konstruktion auf. Die formschlüssige Verbindung zwischen Radnabe und Schaufeln entfällt, z.B. durch Herausfräsen von Schaufeln und Nabe aus einem einzigen Rohling. Im Gegensatz zu nicht integral hergestellten Schaufelrädern, weisen Blisks in der Regel eine geringere und daher schwerer zu bestimmende Dämpfung auf, da keine Energiedissipiation durch Reibung an den formschlüssigen Kontaktflächen zwischen Schaufeln und Radnabe erfolgen kann.

Unterschiede der einzelnen Schaufeln führen dazu, dass Resonanzdurchgänge für jede Schaufel anders aussehen. Diese Eigenschaft wird auch als Verstimmung oder "mistuning" bezeichnet. Ursachen für die Verstimmung von Schaufelrädern können in der Herstellung begründet sein und beispielsweise von einem sich während des Fräsens der Schaufeln abnutzenden Werkzeug hervorgerufen werden. Auch Materialinhomogenitäten sind denkbare Ursachen für eine Verstimmung. Systemdynamisch kann eine Verstimmung dadurch definiert werden, dass die Eigenfrequenzen der einzelnen Schaufeln sich voneinander unterscheiden.

Neben diesen Inhomogenitäten weisen Schaufelräder eine Vielzahl unterschiedlicher Eigenschwingformen (Moden) auf, welche je nach konstruktiver Gestaltung und durch das Zusammenwirken der Komponenten der Schaufelräder im Betrieb zu Schwingungen angeregt werden können.

Generell können sich Eigenfrequenzen und Eigenschwingformen eines Schaufelrades auch in Abhängigkeit der Umdrehungsgeschwindigkeit, des aerodynamischen Drucks und/oder der Temperatur eines mechanischen Objektes, insbesondere eines Schaufelrades, verändern. Beispielsweise steigen die Eigenfrequenzen der Schaufeln üblicherweise mit steigenden Umdrehungsgeschwindigkeit des Schaufelrades. Ein solches System ist also im Betrieb zeitvariant.

Die Vermessung von Schaufelrädern mit eingangs erwähnten, rein frequenzbasierten Verfahren kann zu unbefriedigten Ergebnissen führen. Insbesondere um die geforderten geringen Ausfallraten dieser Objekte zu erreichen, ist eine genaue Bestimmung der mechanischen Parameter erforderlich, insbesondere um materialermüdende Vibrationen zu minimieren.

### Beschreibung

Daraus ergibt sich das Problem der genauen Vermessung und Bestimmung mechanischer Parameter eines mechanischen Objektes, insbesondere der Bestimmung von Dämpfung und Steifigkeit eines Schaufelrades sowie eine Lage und Amplitude von an einem Schaufelrad anregbaren Resonanzfrequenzen.

Dieses Problem wird durch die Erfindung gelöst, welche durch den Gegenstand des unabhängigen Anspruchs 1 definiert ist. Die abhängigen Ansprüche betreffen entsprechende Weiterbildungen. Im Folgenden werden verschiedene Aspekte und Ausführungsformen dieser Aspekte offenbart, die zusätzliche Merkmale und Vorteile bereitstellen.

Einige Ausführungsformen lösen das Problem, dass die Schaufeln einer Blisk mit einer unbekannten Verstimmung gefertigt wurden und dass damit unklar ist, welche im Betrieb zu vermeidende Resonanzen die Blisk aufweist. Dazu werden die Schaufeln in einer ruhenden Position der Blisk gelagert und in einer ersten Messstufe durch ein akustisches Sweep-Signal angeregt. Die Vermessung der Systemantwort erfolgt an ausgewählten Messpunkten an den Schaufeln der Blisk und laservibrometrisch. Aus der dabei erhaltenen Information werden bestimmte Frequenzen ausgewählt, die in einer zweiten Messstufe mit einem Sinussignal akustisch angeregt werden. Aus den dabei aufgenommenen Amplituden- und Phasengängen werden modellbasiert die mechanischen Parameter Dämpfung und/oder Steifigkeit der verschiedenen Schaufeln identifiziert und/oder ebenso die durch das akustische Signal erzeugten Kräfte auf die Schaufeln.

Ein erster Aspekt betrifft ein Verfahren, mit den Schritten:
- erstes Anregen des Objekts mit einem multifrequenten Signal;
- Erfassen eines ersten Antwortsignals des Objekts an einem oder mehreren Messpunkten an dem Objekt;
- Transformieren des ersten Antwortsignals von einem Zeitbereich in einen frequenzabhängigen Bereich;
- Auswählen von einer oder mehreren Frequenzen auf Basis des frequenzabhängigen Bereichs;
- zweites Anregen des Objekts auf Basis der ausgewählten Frequenzen;
- Erfassen eines zweiten Antwortsignals des Objekts an einem oder mehreren Messpunkten des Objekts;
- Ermitteln eines mechanischen Parameters auf Basis des zweiten Antwortsignals.

Ein mechanischer Parameter kann insbesondere eine Dämpfung sein. Zusätzlich oder alternativ kann ein mechanischer Parameter eine Steifigkeit sein. Zusätzlich oder alternativ kann ein mechanischer Parameter eine Eigenfrequenz sein, ein Schwingungsmode, insbesondere ein Parameter eines Schwingungsmode zum Beispiel ein Knotenumfang oder ein Knotendurchmesser. Zusätzlich oder alternativ kann ein mechanischer Parameter auch eine Resonanzfrequenz darstellen, bei der das Objekt verstärkt schwingt bzw. vibriert, wenn es damit angeregt wird. Ein mechanischer Parameter kann ein oder mehrere einzelne der zuvor beschriebenen mechanischen Parameter umfassen. Insbesondere kann ein mechanischer Parameter mehrere mechanische Parameter desselben Typs umfassen, die verschiedene Stellen des mechanischen Objektes betreffen, beispielsweise kann ein mechanischer Parameter Steifigkeiten verschiedener Schaufeln eines Schaufelrades und/oder Steifigkeiten bei unterschiedlichen Betriebsparametern umfassen. Ein mechanischer Parameter kann als Skalar, als Vektor oder als Tensor vorliegen.

Ein mechanisches Objekt kann insbesondere eine Scheibe sein bzw. ein scheibenförmiges Objekt, welches insbesondere verstimmt sein kann. Insbesondere kann ein mechanisches Objekt aus einem Metall bestehen oder aus einem Kunststoff. Insbesondere kann ein mechanisches Objekt ein Metall umfassen oder einen Kunststoff umfassen. Ein mechanisches Objekt kann insbesondere ein Teil einer Turbomaschine oder eines Turboladers sein. Insbesondere kann ein mechanisches Objekt ein Schaufelrad sein oder ein Schaufelrad umfassen und insbesondere ein Schaufelrad einer Verdichterstufe oder Turbostufe einer Turbomaschine sein. Insbesondere kann ein mechanisches Objekt ein Propeller oder ein Impeller sein. Ein mechanisches Objekt kann aber auch ein Musikinstrument sein, insbesondere ein Schlaginstrument, z.B. ein Tomtom oder ein Hi-Hat.

Ein multifrequentes Anregungssignal kann insbesondere ein Diracimpuls oder ein Stufenimpuls sein, wobei zu berücksichtigen ist, dass eine mechanische Realisierung eines solchen multifrequenten Signals in einem tiefpassgefilterten Diracimpuls oder einem tiefpassgefilterten Stufenimpuls resultiert. Alternativ kann ein multifrequentes Anregungssignal auch durch ein Sweep-Signal bzw. ein Chirp-Signal realisiert werden. In einer anderen Alternative kann ein Multifrequenzsignal durch ein weißes Rauschen, bzw. durch ein rosa Rauschen realisiert werden. In einer anderen Alternative kann ein speziell konfektioniertes Anregungssignal zum Einsatz kommen, das beispielsweise in einem Frequenzbereich definiert ist. Außer bei einem Stufensignal weisen diese Eingangssignale den Nachteil auf, dass das angeregte mechanische Objekt sich unter Umständen nur schlecht auf diese Eingangssignale einschwingen kann. Somit werden die Messergebnisse für solche Eingangssignale nicht einen statischen Zustand des mechanischen Systems widerspiegeln. Insbesondere kann ein multifrequentes Anregungssignal auf den höchsten Knotendurchmesser des mechanischen Objektes konfiguriert sein, sodass es insbesondere diese Eigenschwingung anregt.

Dem Erfassen eines ersten Antwortsignals des Objektes an einem oder mehreren Messpunkten an dem Objekt kann insbesondere eine Bestimmung der entsprechenden Messpunkte vorausgehen. Insbesondere kann dabei von einem Finite-Elemente-Modell des mechanischen Objektes ausgegangen werden. Zum Beispiel kann ein Finite-Elemente-Modell von einem Schaufelrad bzw. von einer Schaufel erstellt werden. Durch Simulation des Finite-Elemente Modells oder durch eine entsprechende Simulation des mechanischen Objekts können mechanische Parameter des mechanischen Objektes zu einem gewissen Grade vorbestimmt werden. Zum Beispiel kann identifiziert werden, in welchen Bereichen sich eine Dämpfung oder eine Steifigkeit des mechanischen Objektes bewegen können. Zusätzlich oder alternativ kann festgestellt werden, in welchen Bereich das mechanische Objekt Eigenschwingungen aufweist und/oder welche und/oder wie viele Eigenschwingungsmoden das mechanische Objekt aufweist. Insbesondere können die Eigenbewegungsmoden von einer Schaufel eines Schaufelrades simulatorisch bestimmt werden.

Auf Basis der Simulationsergebnisse können Messpunkte an dem mechanischen Objekt verteilt werden. Insbesondere können Messpunkte an einer freiliegenden Spitze des mechanischen Objektes angeordnet sein, zum Beispiel an einer Ecke oder an einem Ende einer Schaufel eines Schaufelrades. Denn an freiliegenden Enden eines mechanischen Objektes wirken sich Schwingungen der meisten Eigenschwingungsmoden des Objektes aus. Insbesondere können ein oder mehrere Messpunkte an dem mechanischen Objekte so angeordnet sein, dass sie ein Optimierungskriterium erfüllen, insbesondere sodass eine Information optimiert wird, welche durch die Messung erhalten wird. Beispielsweise kann eine solche Optimierung auf einer Maximierung der Fisher-Information basieren. Zusätzlich oder alternativ können die Messpunkte so verteilt sein, dass linear unabhängige Information für verschiedene Moden beobachtet werden kann. Dementsprechend kann die Anzahl der Messpunkte abhängig der Anzahl der in der Simulation ermittelten Eigenschwingungsmoden sein. Beispielsweise können bei sieben ermittelten Eigenschwingungsmoden sieben Messpunkte auf dem mechanischen Objekt angeordnet werden. Eine Messung kann insbesondere mit einem Laser erfolgen, beispielsweise mit einem Laser-Doppler-Vibrometer. Zusätzlich oder alternativ kann eine Messung durch Dehnungsmessstreifen erfolgen, welche an den entsprechenden Messpunkten am mechanischen Objekt angeordnet sind. Zusätzlich oder alternativ kann eine Messung kontaktlos durch bildgebende Verfahren, erfolgen, beispielsweise durch eine Kamera, welche die Messpunkte beobachtet. Dementsprechend müssen die Messpunkte auch so angeordnet sein, dass sie von dem eingesetzten Sensor beobachtet werden können.

Eine Ausführungsform des ersten Aspekts betrifft ein Verfahren, wobei das Objekt ein, insbesondere integriert gefertigtes, Schaufelrad ist oder eine oder mehrere Schaufeln eines Schaufelrades.

Ein solches Schaufelrad kann insbesondere ein integralgefertigtes Schaufelrad sein. Integral gefertigte Schaufelräder werden auch "blade integrated disk", kurz "Blisk", genannt. Mechanische Parameter eines Schaufelrades können insbesondere Scheibenschwingungen betreffen und/oder Schaufelschwingungen und/oder oder Schwingungen, die durch eine Kopplung zwischen Schaufeln und Scheiben erzeugt werden. Insbesondere kann ein mechanischer Parameter auch eine Modekonfiguration, bestehend aus linear und zirkular angeordneten Knoten eines Schaufelrades betreffen. Dabei sind Knoten diejenigen Punkte die bei einer Schwingung einer Schaufel oder einer Schaufelrades in Ruhe verweilen. Mechanische Parameter können insbesondere zeitvariant sein. Dies kann zum Beispiel für Schaufelräder der Fall sein, deren Steifigkeit sich mit zunehmender Drehzahl erhöht und somit abhängig einer Drehzahl und damit entsprechend abhängig einer Zeit sind. Ein mechanischer Parameter kann zusätzlich eine Verstimmung eines mechanischen Objektes, insbesondere eines Schaufelrades betreffen. Eine Verstimmung ist durch unterschiedliche Eigenfrequenzen der Schaufeln eines Schaufelrades definiert. In der Regel sind Schaufelräder verstimmt, da nur im idealen Fall ein Schaufelrad ganz zyklisch bzw. symmetrisch ist. Eine solche Verstimmung kann insbesondere durch fertigungsspezifische Zeitvarianzen hervorgerufen werden, beispielsweise durch eine Werkzeugabnutzung beim Fräsen eines integrierten Schaufelrades oder durch einen Werkzeugwechsel oder durch eine manuelle Nachbearbeitung. Dies sind nur einige Ursachen, die zu Unterschieden in den Schaufeln eines Schaufelrades führen können. Entsprechend kann ein mechanischer Parameter insbesondere eine Standardabweichung der Schaufeleigenfrequenzen betreffen. Zusätzlich oder alternativ kann ein mechanischer Parameter eine oder mehrere absolute Differenzen zwischen verschiedenen Schaufeln eines Schaufelrades betreffen. Weichen die Schaufeleigenfrequenzen voneinander ab, so stellen sich lokal begrenzte Schwingungsamplituden zum Beispiel über einen Umfang eines Schaufelrades ein. Diese Unterschiede führen zu zusätzlichen Fourierkoeffizienten im Spektrum der einzelnen Schaufeln. Auch diese zusätzlichen Koeffizienten bzw. die unterschiedlichen Spektren unterschiedlicher Schaufeln können die Basis für einen mechanischen Parameter bilden. Entsprechend kann ein mechanischer Parameter auch eine Modenfülligkeit eines Schaufelrades betreffen. Zusätzlich oder alternativ kann ein mechanischer Parameter auch einen Lokalisierungsgrad betreffen, der zum Beispiel das Verhältnis der größten Schaufelamplitude zum quadratischen Mittelwert aller Schaufelamplituden eines Schaufelrades ins Verhältnis setzt. Mit diesem mechanischen Parameter können unterschiedliche Schaufelräder bezüglich ihrer Verstimmung verglichen werden.

Erfindungsgemäß erfolgt das erste Anregen durch ein Schallsignal.

Eine erste Anregung mit einem multifrequenten Signal kann insbesondere durch eine akustische Anregung erfolgen. Zusätzlich oder alternativ kann eine erste Anregung auch durch eine mechanische Einheit, zum Beispiel einem Modalhammer, erfolgen mit welcher beispielsweise eine Schaufel eines still gelagerten Schaufelblatts angeregt wird. Zusätzlich oder alternativ kann eine mechanische Anregung auch durch eine Rotation des mechanischen Objektes, insbesondere eine Rotation eines Schaufelrades, erfolgen. In diesem Falle kann eine Anregung durch aerodynamische Effekte erfolgen, insbesondere durch Verwirbelungen durch die Schaufelräder, wenn diese sich in einem Fluid, insbesondere in einem Gas, beispielsweise Luft, bewegen.

Erfindungsgemäß ist das multifrequente Signal ein Sweep-Signal oder ein Chirp-Signal ist.

Bei einem Sweep-Signal oder Chirp-Signal kann eine Signallänge insbesondere zehn Sekunden betragen und eine Veränderung des entsprechenden Impulses kann 1 kHz/s betragen, sodass eine entsprechende Bandbreite an Frequenzen pro Anregungssignal abgebildet werden können.

Ein Sweep-Impuls und/oder Chirp-Impuls kann darüber hinaus so gewählt werden, dass er auf einen hohen Knotendurchmesser, insbesondere den höchsten Knotendurchmesser, abstellt und diesen anregt. Dies kann insbesondere durch entsprechende Parametrierung der Phasenlage des Impulses erreicht werden. Vorteilhaft weisen die hohen Knotendurchmesser bei einem Schaufelrad oft eine geringe Kopplung zwischen der Scheibe und den Schaufeln des Schaufelrades auf, so dass dadurch eine Erfassung eines mechanischen Parameters einer Schaufel verbessert wird und insbesondere eine Verstimmung besser erfasst werden kann.

Erfindungsgemäß ist die Länge des Sweep-Signals oder des Chirp-Signals kürzer ist als eine mechanische Einschwingzeit des Objektes.

Insbesondere kann die Länge des Sweep-Signals oder des Chirp-Signals 10ms sein und/oder ein Frequenzintervall von bis zu 10kHz umfassen. Zusätzlich oder alternativ kann eine Dauer eines Sweep-Impulses abhängig einer zu erfassenden Knotendurchmesserfamilie oder abhängig einer Anzahl der zu erfassenden Knotendurchmesserfamilien sein. Insbesondere kann eine Dauer zwischen 0,5 s und 3 s pro Knotendurchmesserfamilie sein.

Eine Ausführungsform des ersten Aspekts betrifft ein Verfahren, wobei der frequenzabhängige Bereich, in den das erste Antwortsignal transformiert wird, zeitabhängig, drehzahlabhängig und/oder positionsabhängig ist.

Das Transformieren des ersten Ausgangssignals von einem Zeitbereich in einen frequenzabhängigen Bereich kann insbesondere eine lokale oder zeitliche Auflösung umfassen. Beispielsweise kann ein Transformieren des ersten Ausgangssignal durch eine kurze Fouriertransformation in ein Spektrogramm erfolgen. Zusätzlich oder alternativ kann ein Transformieren durch eine Wavelet-Transformation oder durch eine Chirplet-Transformation erfolgen. Vorteilhaft können dadurch insbesondere zeitvariante oder positionsvariante Aspekte des mechanischen Parameters des mechanischen Objektes erfasst werden.

Eine Ausführungsform des ersten Aspekts betrifft ein Verfahren, wobei das Transformieren des ersten Antwortsignals durch eine Wavelet-Transformation oder durch eine Chirplet-Transformation durchgeführt wird. Dabei ergibt sich vorteilhaft, dass diese Transformationen entlang eines Zusammenhangs zwischen Zeit zu Anregungsfrequenz ausgewertet werden.

Eine Wavelet-Transformation kann insbesondere auf Basis einer kontinuierlichen Wavelet-Transformation erfolgen. Alternativ kann eine Wavelet-Transformation auf Basis einer diskreten Wavelet-Transformation erfolgen. Als Wavelets können insbesondere ein Morlet-Wavelet, ein Haar-Wavelet, ein Meyer-Wavelet, oder ein Daubechies-Wavelet verwendet werden. Insbesondere für ein Schaufelrad kann eine Wavelet-Transformation jeweils für unterschiedliche Schaufeln vorgenommen werden.

Eine Ausführungsform des ersten Aspekts betrifft ein Verfahren, wobei das Auswählen einer oder mehrerer Frequenzen auf Basis des frequenzabhängigen Bereichs eine Information über einen Amplituden oder Phasenverlauf über dem frequenzabhängigen Bereich maximiert.

Das Auswählen von einer oder mehreren Frequenzen auf Basis des frequenzabhängigen Bereichs kann insbesondere mehrere Stützstellen in einem frequenzabhängigen Bereich des mechanischen Objektes oder eines Teils des mechanischen Objektes, insbesondere einer Schaufel eines Schaufelrades, umfassen. Zusätzlich oder alternativ können die Stützstellen für unterschiedliche Zeiten, in denen der zeitabhängige Bereich aufgelöst ist, für eine oder mehrere Teile des mechanischen Objektes, insbesondere für eine oder mehrere Schaufeln eines Schaufelrades erfolgen. Insbesondere kann eine Anzahl der Stützstellen so ausgewählt werden, dass ein später zu verwendendes Gleichungssystem zur Ermittlung des mechanischen Parameters bestimmt ist oder überbestimmt ist. Insbesondere können die Stützstellen in einem frequenzabhängigen Bereich so angeordnet sein, dass sie möglichst viel Information über diesen Frequenzverlauf erfassen. Insbesondere können Stützstellen dort ausgewählt werden, wo eine erste Ableitung oder eine zweite Ableitung des frequenzabhängigen Verlaufs hoch bzw. maximal ist. Zusätzlich oder alternativ können Stützstellen dort ausgewählt werden, wo der frequenzabhängige Verlauf Maximalwerte aufweist. Dadurch kann insbesondere eine Resonanzcharakteristik des mechanischen Objektes, insbesondere einer Resonanzcharakteristik einer Schaufel eines Schaufelrades, erfasst werden.

Eine Ausführungsform des ersten Aspekts betrifft ein Verfahren, wobei mehrere Frequenzen so ausgewählt werden, dass ein Gleichungssystem bezüglich des mechanischen Parameters bestimmt oder überbestimmt ist.

Nach dem Erfassen eines zweiten Antwortsignals des Objekts an einem oder mehreren Messpunkten des Objekts, wobei diese Messpunkte sich insbesondere von den Messpunkten beim Erfassen des ersten Antwortsignals des Objektes unterscheiden können, kann insbesondere eine Auswahl der erhaltenen Informationen erfolgen.

Insbesondere kann die Auswahl bezüglich bestimmter Regionen des mechanischen Objektes erfolgen. Wenn das mechanische Objekt ein Schaufelrad ist bzw. eine Schaufel eines Schaufelrades können als Regionen zum Beispiel eine Veering Region oder eine Crossing-Region ausgewählt werden. Zusätzlich oder alternativ können die Ergebnisse bezüglich bestimmter Frequenzen ausgewählt werden, insbesondere weil in diesen bestimmten Frequenzen interessante Schwingungscharakteristika des analysierten mechanischen Objektes beobachtet werden können. Insbesondere können Frequenzen ausgewählt werden, bei denen interessante Knotendurchmesserfamilien auftauchen. Beispielsweise kann eine Knotendurchmesserfamilie, die insbesondere bei einer hohen Frequenz auftaucht, ausgewählt werden und zusätzlich eine Knotendurchmesserfamilie, welche insbesondere bei einer niedrigen Frequenz auftaucht.

Eine Ausführungsform des ersten Aspekts betrifft ein Verfahren, wobei das zweite Anregen des Objekts auf Basis eines oder mehrerer sinusförmiger Anregungssignale erfolgt.

Insbesondere, weil die Qualität der vorherigen Auswertungen noch verbessert werden kann, wird das zweite Anregen des Objektes auf Basis der ausgebildeten Stützstellen durchgeführt. Das zweite Anregen kann insbesondere ähnlich dem ersten Anregen erfolgen und insbesondere auch mit einem Sweep-Signal oder einem Chirp-Signal. Alternativ kann das zweite Anregen insbesondere mit einer sinusförmigen Schwingung erfolgen, beispielsweise mit einer Sinus-Schwingung oder einer Cosinus-Schwingung. Dadurch ergibt sich der Vorteil, dass sich das System auf die Anregung einschwingen kann, sodass als Antwort des mechanischen Objektes auf das zweite Anregen ein eingeschwungenes Verhalten des mechanischen Objektes beobachtet werden kann. Durch die Messungen an den ausgewählten Frequenzen, der auf Basis der ersten Anregung durchgeführten Analyse, können die zuvor ermittelten Ergebnisse besser und höher aufgelöst analysiert werden.

Eine Ausführungsform des ersten Aspekts betrifft ein Verfahren, wobei das Ermitteln des mechanischen Parameters eine Auswahl der zweiten Antwortsignale umfasst auf Basis der der mechanische Parameter ermittelt wird.

Das Ermitteln eines mechanischen Parameters aus dem zweiten Antwortsignal kann insbesondere durch Anpassen der Parameter eines, insbesondere dynamischen, Modells erfolgen. Beispielsweise können die Parameter Dämpfung und Steifigkeit aus einer entsprechenden Bewegungsgleichung für die Schaufel einer Blisk so angepasst werden, dass die Antwort der Bewegungsgleichung bei einer Anregung, die der zweiten Anregung gleicht, die gleiche Systemantwort liefert, oder zumindest eine Systemantwort deren Unterschiede zum Messergebnis minimiert wurde. Selbstverständlich kann die Bewegungsgleichung auch abhängig verschiedener Drehzahlen angepasst werden. Zusätzlich oder alternativ kann die Anregungskraft, die auf eine Schaufel wirkt, errechnet werden, insbesondere wenn mechanische Parameter, die an einer Schaufel identifiziert wurden, auf eine andere Schaufel überträgt und auf dieser Basis die Bewegungsgleichung entsprechend auflöst.

Ebenso kann das Ermitteln des mechanischen Parameters durch ein sogenanntes Reduzierte-Ordnung-Modell durchgeführt werden. Insbesondere kann das Modell zusätzliche Betriebsbedingungen, zum Beispiel eine im Betrieb herrschende Temperatur, im Betrieb herrschende aerodynamische Verhältnisse und/oder im Betrieb herrschende Kräfte, insbesondere Zentrifugalkräfte, mit einrechnen. Dadurch kann die Genauigkeit des erhaltenen mechanischen Parameters weiter gesteigert werden.

Zur Umsetzung des erfindungsgemäßen Verfahrens kann eine Vorrichtung, dazu eingerichtet sein:
- ein erstes Anregen des Objekts mit einem multifrequenten Signal durchzuführen;
- ein erstes Antwortsignal des Objekts an einem oder mehreren Messpunkten an dem Objekt zu erfassen;
- das erste Antwortsignal von einem Zeitbereich in einen frequenzabhängigen Bereich zu transformieren;
- ein zweites Anregen des Objekts auf Basis von ausgewählten Frequenzen durchzuführen;
- ein zweites Antwortsignal des Objektes an einem oder mehreren Messpunkten des Objektes zu erfassen;
- den mechanischen Parameter auf Basis des zweiten Antwortsignals zu ermitteln.

Die Vorrichtung kann darüber hinaus weitere Strukturen und Funktionen umfassen, um die Verfahrensschritte umsetzen zu können, welche oben im Rahmen des ersten Aspekts offenbart wurden.

Das mechanische Objekt kann durch eine oder mehrere Federn mit vorgegebener Steifigkeit gelagert werden.

Die Federung kann insbesondere durch Federn erfolgen, an denen das mechanische Objekt hängend angeordnet ist. Zusätzlich oder alternativ kann die Federung so erfolgen, dass das mechanische Objekt zumindest teilweise durch die Federung getragen wird. Die durch die eine oder mehrere Federn entstehende Steifigkeit kann insbesondere geringer sein als eine Steifigkeit des mechanischen Objektes. Insbesondere kann der Unterschied zwischen der Steifigkeit der Federung und der Steifigkeit des mechanischen Objektes so groß sein, dass das mechanische Objekt praktisch schwimmend gelagert ist, so dass insbesondere Kopplungseffekte zwischen der Vorrichtung und dem mechanischen Objekt, welches Vermessen werden soll, vermieden werden.

Das erste Anregen und/oder das zweite Anregen kann durch eine Mehrzahl von Lautsprechern erfolgen, die jeweils einen Teil des mechanischen Objektes anregen, insbesondere eine von mehreren Schaufeln eines Schaufelrades, und wobei eine Kalibrierung eines Schallpegels und einer Phase für einen oder mehrere Lautsprecher nacheinander erfolgt.

Insbesondere kann das Anregen gleichphasig und/oder mit einem vorgegebenen Phasenversatz zwischen den einzelnen Lautsprechern erfolgen.

### Kurze Beschreibung der Figuren

Weitere Vorteile und Merkmale ergeben sich aus den folgenden Ausführungsformen, die sich auf die Figuren beziehen. Die Figuren zeigen die Ausführungsformen nicht immer maßstabsgetreu. Die Abmessungen der verschiedenen Merkmale können insbesondere zur Klarheit der Beschreibung entsprechend vergrößert oder verkleinert sein. Hierzu zeigt, teilweise schematisiert:
Fig. 1 ein Kopplungsdiagram;
Fig. 2 eine Signaldarstellung eines Wavelets;
Fig. 3 ein Frequenzgang eines mechanischen Objektes;
Fig. 4 ein Kopplungsdiagram;
Fig. 5 ein Kopplungsdiagram; und
Fig. 6 ein Blockdiagram eines Verfahrens nach einer Ausführungsform der Offenbarung.

In den folgenden Beschreibungen beziehen sich identische Bezugszeichen auf identische oder zumindest funktional äquivalente Merkmale.

In der folgenden Beschreibung wird auf die begleitenden Zeichnungen Bezug genommen, die einen Teil der Offenbarung bilden und in denen zur Veranschaulichung spezifische Aspekte gezeigt sind, in denen die vorliegende Offenbarung verstanden werden kann. Es versteht sich, dass andere Aspekte und/oder Merkmale verwendet werden können und funktionale, strukturelle oder logische Änderungen möglich sind, ohne den Umfang der vorliegenden Offenbarung zu verlassen. Die folgende detaillierte Beschreibung ist daher nicht einschränkend zu verstehen, da der Umfang der vorliegenden Erfindung durch die beigefügten Ansprüche definiert ist.

Generell gilt eine Offenbarung über ein beschriebenes Verfahren auch für eine entsprechende Vorrichtung, um das Verfahren durchzuführen, oder ein entsprechendes System, welches ein oder mehrere Vorrichtungen umfasst, und umgekehrt. Wenn beispielsweise ein spezieller Verfahrensschritt beschrieben wird, kann eine entsprechende Vorrichtung ein Merkmal umfassen, um den beschriebenen Verfahrensschritt durchzuführen, auch wenn dieses Merkmal in der Figur nicht explizit beschrieben oder dargestellt ist. Wenn andererseits beispielsweise eine spezielle Vorrichtung auf der Grundlage von Funktionseinheiten beschrieben wird, kann ein entsprechendes Verfahren einen Schritt umfassen, der die beschriebene Funktionalität ausführt, auch wenn solche Schritte in den Figuren nicht explizit beschrieben oder dargestellt sind. Ebenso kann ein System mit entsprechenden Vorrichtungsmerkmalen versehen werden oder mit Merkmalen, um einen bestimmten Verfahrensschritt auszuführen. Es versteht sich, dass Merkmale der verschiedenen zuvor oder nachfolgend beschriebenen beispielhaften Aspekte und Ausführungsformen miteinander kombiniert werden können, sofern nicht ausdrücklich anders angegeben.

### Beschreibung der Figuren

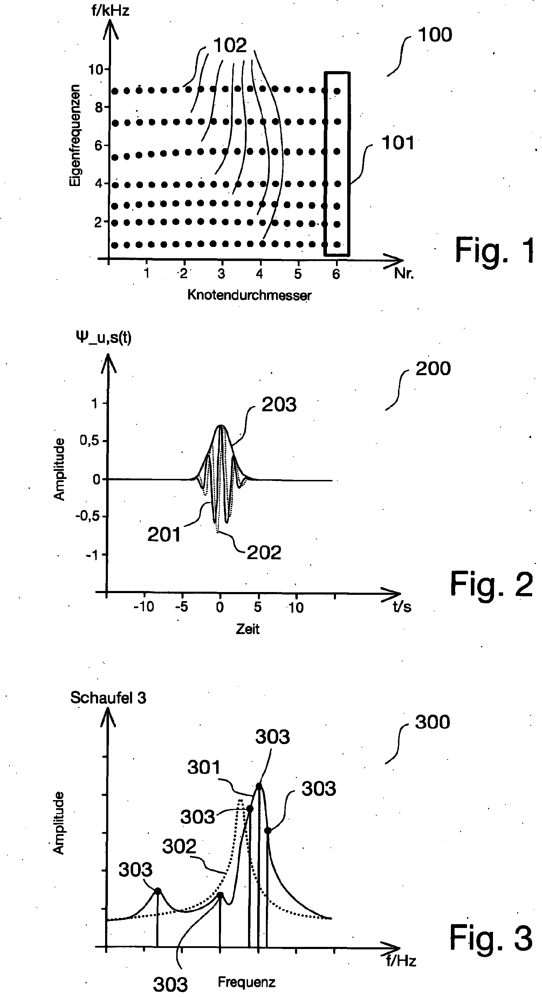

Die **Fig. 1** bezieht sich auf ein erstes Anregen eines mechanischen Objektes. In diesem Fall ist das mechanische Objekt ein integral gefertigtes Schaufelrad. Zur besseren Veranschaulichung des komplexen Schwingverhaltens eines Schaufelrades kann das Kopplungsdiagramm genutzt werden. Hierbei sind die Eigenfrequenzen des Schaufelrades über der dazugehörigen Anzahl der Knotendurchmesserlinien aufgetragen. Fig. 1 zeigt ein solches Kopplungsdiagramm 100 und darüber hinaus verschiedene Knotendurchmesserfamilien 102, die jeweils durch ähnliche Eigenfrequenzen gekennzeichnet sind. Bei den in Fig. 1 dargestellten nichtganzzahligen Knotendurchmessern handelt es sich um Interpolationen, die allein einer Verdeutlichung der Lage einer Knotendurchmesserfamilie dienen. Die betrachteten Eigenfrequenzen reichen von 0-10 kHz. Dabei sind insgesamt sieben Knotendurchmesserfamilien dargestellt. Eine erste Knotendurchmesserfamilie schwingt bereits bei unter 1 kHz. Eine zweite Knotendurchmesserfamilie schwingt bei ca. 2 kHz. Weitere Knotendurchmesserfamilien schwingen mit Eigenfrequenzen zwischen 2 kHz und 8 kHz. Eine oberste Knotendurchmesserfamilie schwingt bei ca. 9 kHz. Die betrachtete integral gefertigte Schaufelradscheibe wird durch das Verfahren zum Erfassen mindestens eines mechanischen Parameters mit einem ersten multifrequenten Signal angeregt. Diese Anregung erfolgt dadurch, dass die Schaufelradscheibe stabil in Ruhe gelagert wird. Unter jeder Schaufel der Schaufelradscheibe ist ein Lautsprecher als akustischer Aktor angeordnet, welcher das multifrequente Signal so abgeben kann, dass es in gleicher Art und Weise auf jeweils eine Schaufel der Schaufelradscheibe trifft und diese in eine erste Anregung versetzt. Um eine Drehung der Schaufelradscheibe zu emulieren, werden die Lautsprecher mit einem entsprechenden Phasenversatz angesteuert, sodass jeder Lautsprecher für seine Schaufel eine entsprechende Anregung phasenversetzt abgibt und damit die entsprechenden Schaufeln ebenfalls phasenversetzt angeregt werden. Die phasenversetzte Ansteuerung wird durch ein entsprechendes Steuergerät, welches auch das multifrequente Signal erzeugt, produziert. Um unerwünschte Kopplungseffekte zwischen den Schaufeln oder der Schaufelradscheibe und der Vorrichtung zum Erfassen des mindestens einen mechanischen Parameters der Schaufelradscheibe zu vermeiden, wird die Schaufelradscheibe durch die Vorrichtung auf drei Federn gelagert. Die Federn sind als Spiralfedern ausgeführt und befinden sich unterhalb der Schaufelradscheibe, sodass die Schaufelradscheibe sich mit ihrem Gewicht auf den drei Federn abstützt. Die Federn weisen eine gemeinsame Steifigkeit auf, welche erheblich unter der Steifigkeit liegt, welche die Schaufelradscheibe aufweist bzw. die von der Schaufelradscheibe und ihren Schaufeln erwartet wird. Durch das erste Anregen mit einem multifrequenten Signal 101 wird die Schaufelradscheibe über ihre Schaufeln in Schwingungen versetzt. Das multifrequente Signal 101 stellt in diesem Fall einen Sweep-Impuls dar. Der Sweep-Impuls wird aus 3,84*10^6 Stützstellen im Zeitbereich erzeugt. Das Sweep-Signal durchläuft Frequenzen, die von der niedrigsten Frequenz zur höchsten Frequenz eine Bandbreite von 10 kHz umfassen. Alternativ wurde das Verfahren auch mit einem Anregungssignal mit 22 s und mit einer Taktrate von 375 kHz Takt mit 80 Lautsprechern für alle Schaufeln eines Schaufelrades realisiert. Im Unterschied zu dem in der DE 102009010375 A1 offenbarten Verfahren wird, die Anregung nicht nur mit Einzelfrequenzen, sondern auch mit einer stetigen Aneinanderreihung mehrerer Frequenzen als kontinuierliche Frequenzdurchfahrt implementiert. Außerdem wird die Phasenansteuerung nicht mehr mit einer Verzögerungseinrichtung realisiert, sondern mit einem Signalausgabegerät, auf dem die phasenverschobenen und kalibrierten Signale statisch abgespeichert werden. Die Kalibrierung erfolgt für Schallpegel und Phase hintereinander. Und das offenbarte Verfahren umfasst anstatt einer einzigen Vermessungsstufe zwei Stufen mit einem ersten Anregen und einem zweiten Anregen, zur Erhöhung der Genauigkeit des erfassten mechanischen Parameters.

Die **Fig. 2** zeigt einen Signalverlauf 200 eines Mutter-Wavelets, mit dessen Hilfe ein oder mehrere Antwortsignale, welche sich aus der ersten Anregung mit einem Sweep-Signal ergeben, in einen frequenz- und zeitabhängigen Bereich transformiert werden. In diesem Fall stellt das Mutter-Wavelet ein Morlet-Wavelet dar. Mit dessen Hilfe wird eine Wavelet-Transformation durchgeführt. Das Morlet-Mutter-Wavelet weist einen Realteil 201 und einen Imaginärteil 202 auf. Eine Amplitude 203 des Wavelets ist als Einhüllende markiert. Die durch die Wavelet-Transformation verarbeiteten Signale, welche als Antwortsignale auf das erste Anregen mit dem Sweep-Impuls 101, laservibrometrisch an den einzelnen Schaufeln erfasst werden, werden an einer Mehrzahl von Messpunkten bestimmt. Die Messpunkte sind an einer oberen Spitze einer jeder Schaufel angeordnet. Die Messpunkte sind so verteilt, dass zuvor simulatorisch ermittelte Knotendurchmesserfamilien erfasst werden können.

Die **Fig. 3** offenbart einen Amplitudengang 300, also eine Amplitude, welche über einer Frequenz aufgetragen ist. Der Amplitudengang 301 repräsentiert das Schwingungsverhalten der dritten Schaufel des Schaufelrades bei einer Umdrehungsgeschwindigkeit von 5000 Umdrehungen/min und zeigt dabei eine Resonanz. Diese Umdrehungszahl wird beim Hochfahren des Schaufelrades nach einer definierten Betriebszeit erreicht und stellt einen typischen Betriebszustand dar, in welchem das Schaufelrad operiert. Zusätzlich zum Amplitudengang der dritten Schaufel des Schaufelrades ist ein idealer Amplitudengang 302 bei der entsprechenden Umdrehungsgeschwindigkeit dargestellt. Die Verstimmung ergibt sich nun beispielsweise aus der Differenz des idealen Amplitudengangs zum Amplitudengang der entsprechenden Schaufel.

Die Fig. 3 zeigt des Weiteren ein Auswählen mehrerer Frequenzen 303 als Stützstellen aus dem gemessenen frequenzabhängigen Bereich. Die ausgewählten Frequenzen sind durch senkrechte Linien dargestellt, die jeweils mit einem runden Punkt auf der gemessenen Kurve enden. Dementsprechend werden die Stützstellen für die dritte Schaufel und bei einer Drehzahl von 5000 Umdrehungen/min ausgewählt. Zusätzlich oder alternativ können ein oder mehrere Stützstellen auch für andere Umdrehungszahlen ausgewählt werden. Fig. 3 zeigt nur das Auswählen der Stützstellen für die dritte Schaufel. Dieser Schritt wird im vorliegenden Beispiel für alle Schaufeln des Schaufelrades vorgenommen, um die Unterschiede bezüglich der mechanischen Parameter zwischen den einzelnen Schaufeln und damit die Verstimmung des Schaufelrades bezüglich einer Knotenfamilie festzustellen. Dabei werden insbesondere so viele Stützstellen für eine Schaufel benötigt, dass das später verwendete Gleichungssystem, aus welchen die mechanischen Parameter ermittelt werden, zumindest bestimmt ist, also eine eindeutige Lösung ermöglicht. Dies sind im vorliegenden Fall zwei Stützstellen pro Schaufel und pro Knotenfamilie. Insbesondere können für alle Schaufeln die gleichen Stützstellen verwendet werden. Alternativ können auch mehr Stützstellen ausgewählt werden, insbesondere drei, vier, fünf oder zehn, so dass das Gleichungssystem überbestimmt ist. Ein überbestimmtes Gleichungssystem kann zum Beispiel durch die Methode der kleinsten Quadrate, insbesondere durch Verwendung der Moore-Penrose-Pseudoinversen, bezüglich des oder der mechanischen Parameter aufgelöst werden.

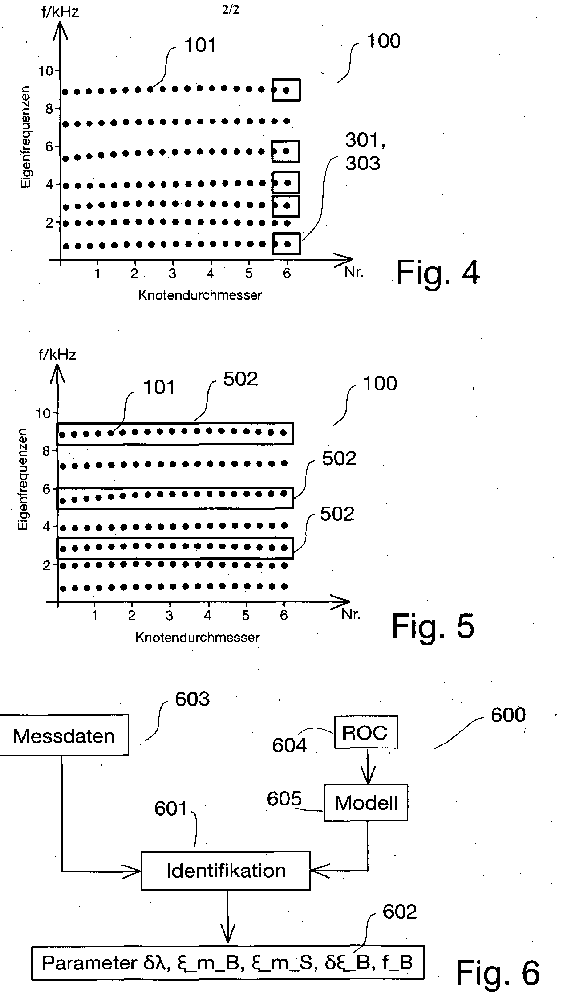

Die **Fig. 4** zeigt das Kopplungsdiagramm 100 aus Fig. 1. Zusätzlich sind in Fig. 4 die ausgewählten Frequenzen 303 nunmehr entlang der Y-Achse eingezeichnet. Sie liegen in dem unteren Viereck am rechten Rand des Diagramms. Des Weiteren sind noch weitere Modenfamilien in Fig. 4 eingezeichnet, die sich aus weiteren nicht dargestellten Resonanzen, welche insbesondere auch jeweils mit mindestens fünf Stützstellen repräsentiert sein können, ergeben. Mit diesen Frequenzen wird ein zweites Anregen des integrierten Schaufelrades durchgeführt. Dabei wird nicht wie beim ersten Anregen ein einziges multifrequentes Signal verwendet, sondern das Schaufelrad bzw. die Schaufeln werden mit einzelnen monofrequenten Sinusschwingungen, die nur die ausgewählten Frequenzen umfassen, angeregt. Die Art der Anregung und die experimentelle Umsetzung bleibt dabei dieselbe, wie beim ersten Anregen des Schaufelrades.

Die **Fig. 5** zeigt ebenfalls das Kopplungsdiagramm 100 aus Fig. 1 bzw. Fig. 4. Nachdem das Schaufelrad mit den ausgewählten Frequenzen über Sinus-Impulse ein zweites Mal angeregt wurde, werden ein zweites Mal Frequenzen bzw. Frequenzbereiche ausgewählt. Diese Frequenzbereiche umfassen, wie in Fig. 5 gezeigt, einzelne Knotendurchmesserfamilien 502. Mit den entsprechenden Amplituden bzw. Phasen bei den ausgewählten Frequenzbereichen kann nunmehr ein Modell berechnet werden, aus welchem die entsprechend gewünschten Parameter, in diesem Fall das Lehrsche Dämpfungsmaß, Steifigkeitsänderungen, Dämpfungseigenschaften und die Anregung, bestimmt werden. Dabei kann als Basis für das Gleichungssystem ein sogenannter Reduzierte-Ordnungs-Code (ROC) verwendet werden.

Die **Fig. 6** zeigt einen Überblick über das offenbarte Verfahren nach einer Ausführungsform. Dabei wird die Identifikation 601 verschiedener mechanischer Parameter 602 eines mechanischen Objektes mittels einer modellbasierten Anpassung 605 entsprechender Parameter hinsichtlich experimentell ermittelter Information 603 durchgeführt und mithilfe eines ROC 604 errechnet. Dabei repräsentiert der Parameter δλ eine Änderung der Steifigkeit einer Schaufel, z.B. relativ zu einem Durchschnittswert oder zur Steifigkeit der vorherigen Schaufel. Der Parameter ξ stellt eine Dämpfung einer Schaufel dar, z.B. gemäß dem Lehrschen Dämpfungsmaß. Der Parameter ξ_m_B repräsentiert die mittlere Dämpfung der Schaufeln. Der Parameter betrifft die mittlere Dämpfung der Scheibe ξ_m_S. Der Parameter δξ_B gibt eine Abweichung der Dämpfung einer Schaufel von ξ_m_B an. Der Parameter f_B gibt die Anregung für eine Schaufel oder für jede Schaufel wieder. Durch einen Satz von Parametern für jede Schaufel des Schaufelrades lässt sich eine Verstimmung des Schaufelrades umfassend beschreiben.

Das Gleichungssystem umfasst also die Änderung der Steifigkeit jeder Schaufel. Des Weiteren umfasst das Gleichungssystem die Dämpfungseigenschaften der Scheibe und/oder der Schaufeln, dabei kann die Dämpfung jeder Schaufel insbesondere separat und/oder als ein mittlerer Wert bestimmt werden. Das Gleichungssystem umfasst weiterhin die Anregung der Schaufeln und/oder der Scheibe entsprechend der Anregung bei der Messung, dabei kann die Anregung auf eine oder mehrere Schaufeln, insbesondere jede Schaufel, aufgeprägt werden und/oder auf die Scheibe.

## Patentansprüche

1. Ein Verfahren (600) zum Ermitteln mindestens eines mechanischen Parameters (δλ, ξ_m_B, ξ_m_S, δξ_B, f_B) eines mechanischen Objekts, mit den Schritten:
- erstes Anregen des Objekts mit einem multifrequenten Signal (101);
- Erfassen eines ersten Antwortsignals des Objekts an einem oder mehreren Messpunkten an dem Objekt;
- Transformieren des ersten Antwortsignals von einem Zeitbereich in einen frequenzabhängigen Bereich (300);
- Auswählen von einer oder mehreren Frequenzen (303) auf Basis des frequenzabhängigen Bereichs;
- zweites Anregen des Objekts auf Basis der ausgewählten Frequenzen (303);
- Erfassen eines zweiten Antwortsignals des Objekts an einem oder mehreren Messpunkten des Objekts;
- Ermitteln eines mechanischen Parameters (δλ, ξ_m_B, ξ_m_S, δξ_B, f_B) auf Basis des zweiten Antwortsignals, **dadurch gekennzeichnet, dass**
das erste Anregen durch ein Schallsignal erfolgt und das multifrequente Signal ein Sweep-Signal oder ein Chirp-Signal ist, wobei die Länge des Sweep-Signals oder des Chirp-Signals kürzer ist als eine mechanische Einschwingzeit des Objektes.

2. Das Verfahren nach dem vorherigen Anspruch, wobei das Objekt ein, insbesondere integriert gefertigtes, Schaufelrad ist oder eine oder mehrere Schaufeln eines Schaufelrades.

3. Das Verfahren nach einem der vorherigen Ansprüche, wobei der frequenzabhängige Bereich (300), in den das erste Antwortsignal transformiert wird, zeitabhängig, drehzahlabhängig und/oder positionsabhängig ist.

4. Das Verfahren nach dem vorherigen Anspruch, wobei das Transformieren des ersten Antwortsignals durch eine Wavelet-Transformation (200) oder durch eine Chirplet-Transformation durchgeführt wird.

5. Das Verfahren nach einem der vorherigen Ansprüche, wobei das Auswählen einer oder mehrerer Frequenzen (301) auf Basis des frequenzabhängigen Bereichs eine Information über einen Amplituden- oder Phasenverlauf über dem frequenzabhängigen Bereich maximiert.

6. Das Verfahren nach einem der vorherigen Ansprüche, wobei mehrere Frequenzen (301, 303) so ausgewählt werden, dass ein Gleichungssystem bezüglich des mechanischen Parameters (δλ, ξ_m_B, ξ_m_S, δξ_B, f_B) bestimmt oder überbestimmt ist.

7. Das Verfahren nach einem der vorherigen Ansprüche, wobei das zweite Anregen des Objekts auf Basis eines oder mehrerer sinusförmiger Anregungssignale (301) erfolgt.

8. Das Verfahren nach einem der vorherigen Ansprüche, wobei das Ermitteln des mechanischen Parameters eine Auswahl der zweiten Antwortsignale (502) umfasst, auf deren Basis der mechanische Parameter (δλ, ξ_m_B, ξ_m_S, δξ_B, f_B) ermittelt wird.

## Claims

1. Method (600) for determining at least one mechanical parameter (δλ, ξ_m_B, ξ_m_S, δξ_B, f_B) of a mechanical object, having the steps of:
- first excitation of the object with a multifrequency signal (101);
- detecting a first response signal of the object at one or more measuring points on the object;
- transforming the first response signal from a time range into a frequency-dependent range (300);
- selecting one or more frequencies (303) on the basis of the frequency-dependent range;
- second excitation of the object on the basis of the selected frequencies (303);
- detecting a second response signal of the object at one or more measuring points of the object;
- determining a mechanical parameter (δλ, ξ_m_B, ξ_m_S, δξ_B, f_B) on the basis of the second response signal, **characterized in that**
the first excitation is carried out by a sound signal and the multifrequency signal is a sweep signal or a chirp signal, the length of the sweep signal or the chirp signal being shorter than a mechanical settling time of the object.

2. Method according to the preceding claim, wherein the object is a blade wheel, in particular one manufactured in an integrated manner, or one or more blades of a blade wheel.

3. Method according to either of the preceding claims, wherein the frequency-dependent range (300) into which the first response signal is transformed is time dependent, speed dependent and/or position dependent.

4. Method according to the preceding claim, wherein the transformation of the first response signal is carried out by a wavelet transformation (200) or by a chirplet transformation.

5. Method according to any of the preceding claims, wherein selecting one or more frequencies (301) on the basis of the frequency-dependent range maximizes information about an amplitude- or phase response over the frequency-dependent range.

6. Method according to any of the preceding claims, wherein a plurality of frequencies (301, 303) are selected such that a system of equations is determined or overdetermined with respect to the mechanical parameter (δλ, ξ_m_B, ξ_m_S, δξ_B, f_B).

7. Method according to any of the preceding claims, wherein the second excitation of the object is carried out on the basis of one or more sinusoidal excitation signals (301).

8. Method according to any of the preceding claims, wherein determining the mechanical parameter comprises selecting the second response signals (502) on the basis of which the mechanical parameter (δλ, ξ_m_B, ξ_m_S, δξ_B, f_B) is determined.

## Revendications

1. Procédé (600) permettant de déterminer au moins un paramètre mécanique (δλ, ξ_m_B, ξ_m_S, δξ_B, f_B) d'un objet mécanique, comportant les étapes consistant à :
- effectuer une première stimulation de l'objet avec un signal multifréquences (101) ;
- détecter un premier signal de réponse de l'objet au niveau d'un ou plusieurs points de mesure sur l'objet ;
- transformer le premier signal de réponse d'un domaine temporel en un domaine dépendant de la fréquence (300) ;
- sélectionner une ou plusieurs fréquences (303) sur la base du domaine dépendant de la fréquence ;
- effectuer une seconde stimulation de l'objet sur la base des fréquences (303) sélectionnées ;
- détecter un second signal de réponse de l'objet au niveau d'un ou plusieurs points de mesure de l'objet ;
- déterminer un paramètre mécanique (δλ, ξ_m_B, ξ_m_S, δξ_B, f_B) sur la base du second signal de réponse, **caractérisé en ce que**
la première stimulation est effectuée par un signal sonore et le signal multifréquences est un signal de balayage ou un signal chirp, dans lequel la longueur du signal de balayage ou du signal chirp est plus courte qu'un régime transitoire mécanique de l'objet.

2. Procédé selon la revendication précédente, dans lequel l'objet est une roue à aubes, en particulier fabriquée de manière intégrée, ou une ou plusieurs aubes d'une roue à aubes.

3. Procédé selon l'une des revendications précédentes, dans lequel le domaine dépendant de la fréquence (300) dans lequel le premier signal de réponse est transformé dépend du temps, de la vitesse de rotation et/ou de la position.

4. Procédé selon la revendication précédente, dans lequel la transformation du premier signal de réponse est réalisée par une transformation en ondelettes (200) ou par une transformation chirplet.

5. Procédé selon l'une des revendications précédentes, dans lequel la sélection d'une ou plusieurs fréquences (301) sur la base du domaine dépendant de la fréquence maximise une information concernant une variation d'amplitude ou de phase sur le domaine dépendant de la fréquence.

6. Procédé selon l'une des revendications précédentes, dans lequel plusieurs fréquences (301, 303) sont sélectionnées de sorte qu'un système d'équations relatif au paramètre mécanique (δλ, ξ_m_B, ξ_m_S, δξ_B, f_B) est déterminé ou surdéterminé.

7. Procédé selon l'une des revendications précédentes, dans lequel la seconde stimulation de l'objet est effectuée sur la base d'un ou plusieurs signaux de stimulation sinusoïdaux (301).

8. Procédé selon l'une des revendications précédentes, dans lequel la détermination du paramètre mécanique comprend une sélection des seconds signaux de réponse (502) sur la base desquels le paramètre mécanique (δλ, ξ_m_B, ξ_m_S, δξ_B, f_B) est déterminé.
